# FASCICULE DE BREVET EUROPEEN

(11) **EP 0 393 288 B1**
(45) Date de publication et mention de la délivrance du brevet: **15.06.1994**
(21) Numéro de dépôt: 89401147.7
(22) Date de dépôt: 21.04.1989
(51) Int. Cl.: G07B 11/09, G06K 13/063

(54) **Dispositif de traitement d'un titre à piste magnétique, en particulier d'un titre de transport aérien**
Vorrichtung zur Verarbeitung einer Fahrkarte mit Magnetstreifen, insbesondere Flugkarte
Device for processing a ticket with a magnetic strip, in particular an airline ticket

(43) Date de publication de la demande: 24.10.1990
(73) Titulaire: DASSAULT AUTOMATISMES ET TELECOMMUNICATIONS, F-78370 Plaisir (FR)
(72) Inventeur: Plouzennec, Thierry, F-92500 Rueil-Malmaison (FR); Bluteau, Bernard, F-92290 Chatenay-Malabry (FR)
(74) Mandataire: Plaçais, Jean-Yves

(56) Documents cités:
- EP-A- 0 270 080
- WO-A-85/04973
- CA-A- 1 184 658
- DE-A- 2 134 891
- FR-A- 2 338 798
- FR-A- 2 566 704
- FR-A- 2 628 868
- US-A- 3 825 950
- US-A- 4 086 475
- US-A- 4 259 699

## Description

L'invention concerne le traitement d'un titre à piste magnétique, en particulier d'un titre de transport aérien.

On connaît déjà des dispositifs de traitement d'un titre de transport à piste magnétique comprenant un poste d'introduction du titre, un poste de lecture/écriture magnétique sur le titre et un poste de délivrance du titre. Des moyens entraînent le titre selon un trajet interne allant du poste d'introduction jusqu'au poste de délivrance. Ces moyens d'entraînement sont définis au moins en partie par une courroie enroulée en circuit fermé sur des galets dont l'un est moteur (EP-A-0 270 080 ; FR-A-2 566 704).

Généralement, de tels dispositifs traitent des titres de transport à piste magnétique contenant sur un seul tronçon des informations magnétiques relatives audit transport.

Il est maintenant demandé par les organisations internationales des transports aériens que le titre de transport comporte au moins deux tronçons détachables dont le premier dit coupon de vol contienne des informations magnétiques relatives aux caractéristiques commerciales et financières de la prestation de transport (qui peut impliquer plusieurs compagnies aériennes) et dont le second dit carte d'embarquement contienne des informations relatives à l'embarquement du passager.

De plus, la cinématique de tels dispositifs utilise plusieurs moteurs pas à pas ou continus, ce qui nuit à la compacité desdits dispositifs.

La Demanderesse s'est posé le problème de réaliser un dispositif compact de traitement d'un titre à piste magnétique, en particulier d'un titre de transport et comprenant de tels tronçons coupon de vol et carte d'embarquement.

L'invention porte sur un dispositif de traitement d'un titre à piste magnétique, en particulier d'un titre de transport aérien, du type décrit ci-avant.

Selon un premier aspect de l'invention, en combinaison, avec les caractéristiques du preámble de la revendication 1:
- le titre présente des lignes d'affaiblissement (16) au format de découpe et de partition des tronçons du titre,
- ladite courroie (C1) en circuit fermé est entraînée par un moteur unique (M) du type pas à pas, est prévue au niveau du poste de lecture/écriture (19) et s'étend jusqu'à un tambour (T) autour duquel coopèrent le poste de délivrance (G3, G4) du titre ainsi qu'au moins une sortie supplémentaire du titre, la lecture/écriture magnétique s'effectuant avant la partition des tronçons du titre,
- tandis qu'un poste de découpe (20) est prévu entre le poste de lecture/écriture (19) et le tambour (T), ce qui permet de diriger les tronçons du titre ainsi découpés vers le poste de délivrance (30) ou vers la sortie supplémentaire en fonction du contenu des informations lisibles sur lesdits tronçons.

De préférence, la sortie supplémentaire est couplée à au moins un réceptacle de stockage de titres et le titre de transport comprend au moins un premier tronçon dit carte d'embarquement destiné à être dirigé vers le poste de délivrance, ledit premier tronçon contenant des informations magnétiques relatives à l'embarquement du passager, et un second tronçon dit coupon de vol destiné à être dirigé vers le réceptacle de stockage, ledit second tronçon contenant des informations relatives aux caractéristiques commerciales et financières de la prestation de transport. En pratique, le réceptacle de stockage de titres est disposé à l'intérieur du dispositif.

Avantageusement, le réceptacle de stockage de titres est subdivisé en deux parties propres à recevoir chacune les tronçons du titre en fonction du contenu des informations lisibles sur lesdits tronçons.

Selon un mode de réalisation préféré de l'invention, le titre de transport, de forme générale rectangulaire, comprend une piste magnétique s'étendant longitudinalement a une distance prédéterminée d'un bord du titre.

Selon un autre mode de réalisation préféré de l'invention, le poste de lecture/écriture magnétique comprend d'un côté une tête de lecture/écriture magnétique montée sur un support placé transversalement par rapport au trajet interne du titre, ledit support étant solidaire d'une platine de référence fixée parallèlement audit trajet, le bord longitudinal du titre espacé d'une distance prédéterminée de la piste magnétique prenant appui sur ladite platine tandis que la tête de lecture est espacée de la platine de ladite distance prédéterminée pour permettre une lecture correcte de la piste magnétique, et de l'autre côté un galet monté fou en regard de la tête de lecture/écriture et coopérant avec ladite tête par friction à l'aide d'un rappel élastique en vue d'assurer la pression du titre sur ladite tête.

Selon un autre mode de réalisation préféré de l'invention, le poste de lecture/écriture magnétique comprend d'un côté une tête de lecture/écriture magnétique supplémentaire montée sur un cadre souple placé parallèlement au trajet interne du titre, ledit cadre étant solidaire d'un volet monté flottant parallèlement à la platine de référence, le bord longitudinal du titre espacé d'une distance prédéterminée de la piste magnétique prenant appui sur ledit volet tandis que la tête supplémentaire est espacée du volet de ladite distance prédéterminée pour permettre une lecture correcte de la piste magnétique quel que soit le sens d'introduction du titre, et de l'autre côté un galet supplémentaire monté fou en regard de la tête de lecture/écriture supplémentaire et coopérant avec ladite tête supplémentaire par friction à l'aide d'un rappel élastique en vue d'assurer la pression du titre sur ladite tête supplémentaire.

En pratique, le titre présente une longueur comprise entre 52 millimètres et 250 millimètres et les galets d'entraînement du titre sont espacés les uns des autres d'une distance sensiblement égale à 50 millimètres en vue d'entraîner un titre présentant une telle longueur.

Selon un autre mode de réalisation préféré de l'invention, le poste de découpe comprend un massicot électromagnétique commandé en liaison avec un détecteur des tronçons du titre, ledit massicot électromagnétique comprenant un électro-aimant possédant un plongeur muni d'une équerre supportant la pièce de découpe du massicot, ladite équerre étant montée en rotation autour d'un axe rappelé élastiquement pour permettre au poste de découpe de s'étendre horizontalement en vue d'assurer une compacité du dispositif de traitement selon l'invention.

En pratique, le détecteur des tronçons du titre repère les lignes d'affaiblissement prédéterminées sur le titre.

Selon un autre mode de réalisation préféré de l'invention, des moyens d'aiguillage, commandés en liaison avec le poste de lecture/écriture magnétique dirigent les tronçons du titre vers leur sortie respective.

D'autres caractéristiques et avantages de l'invention apparaîtront à l'examen de la description détaillée ci-après, et des dessins annexés sur lesquels :
- la figure 1 est une vue latérale schématique d'un dispositif de traitement selon l'invention;
- la figure 2 représente un exemple d'un titre de transport aérien traité par ledit dispositif selon l'invention; et
- la figure 3 est une vue du dessus schématique montrant le positionnement des deux têtes de lecture/écriture selon l'invention.

Les dessins annexés comportent à de nombreux titres des éléments de caractère certain. En conséquence, ils sont à considérer comme partie intégrante de la description, et pourront servir non seulement à mieux faire comprendre la description détaillée ci-après, mais aussi à compléter la définition de l'invention, le cas échéant.

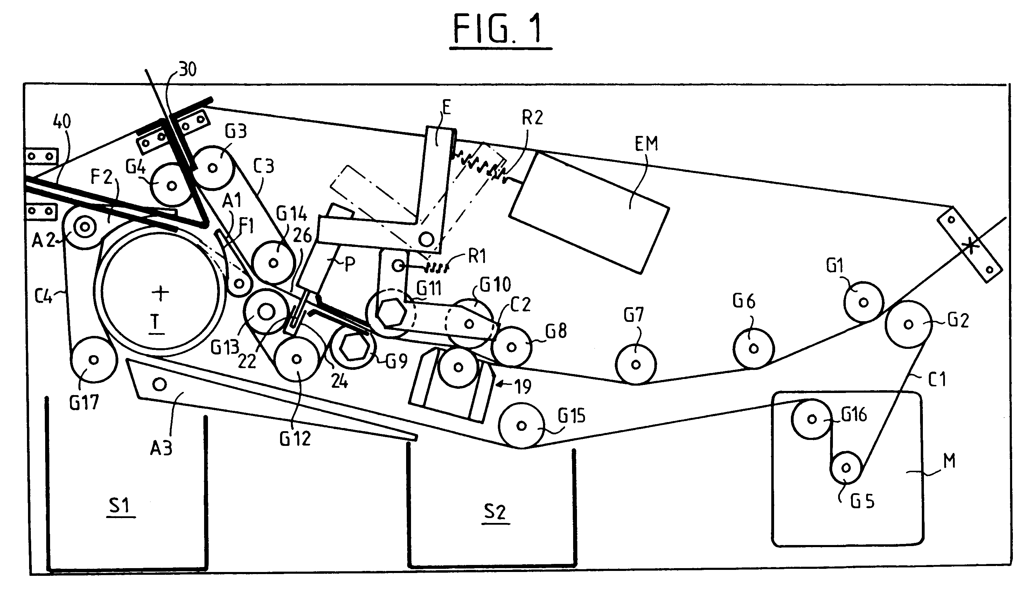

L'appareil représenté schématiquement à la figure 1 est destiné plus particulièrement au traitement d'un titre de transport aérien comprenant une piste magnétique. Un tel traitement peut comprendre une lecture magnétique et/ou un enregistrement magnétique suivi(s) d'une séparation des tronçons du titre vis-à-vis du titre prédécoupé en fonction du contenu des informations lisibles sur les tronçons.

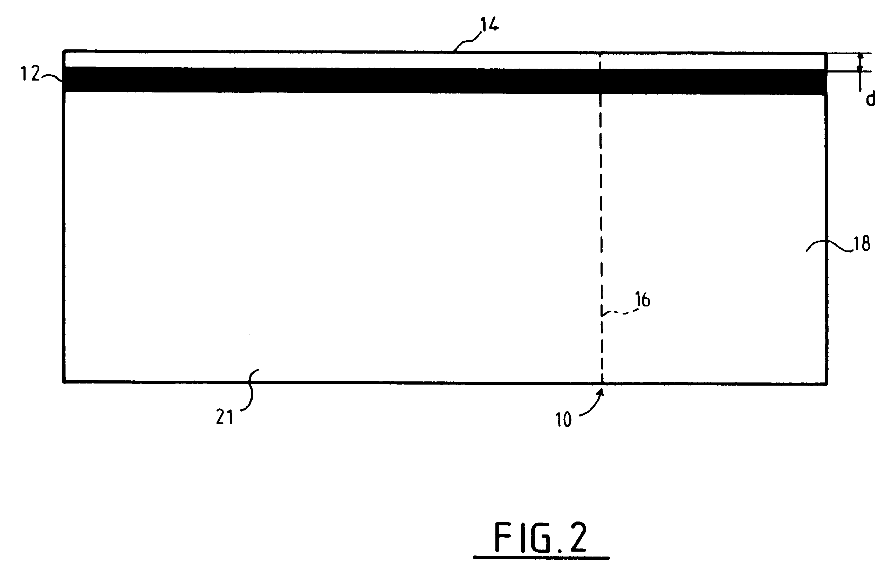

En pratique, comme représenté sur la figure 2, le titre de transport aérien 10, de forme générale rectangulaire, comprend une piste magnétique 12 s'étendant longitudinalement sur le titre, à une distance prédéterminée d d'un bord longitudinal 14 du titre.

Selon un mode de réalisation préféré de l'invention, le titre présente des lignes d'affaiblissement 16 au format de découpe et de partition d'un tronçon 18 dit carte d'embarquement et d'un tronçon 21 dit coupon de vol.

Le tronçon 18 contient des informations magnétiques relatives à l'embarquement du passager. Ce tronçon 18 est destiné à être dirigé, après traitement, vers un poste de délivrance que l'on décrira ci-après, en vue d'être remis au passager qui le conservera pour contrôle ultérieur éventuel.

Le tronçon 21 contient des informations relatives aux caractéristiques commerciales et financières de la prestation de transport. Ce tronçon 21 qui fait office de coupon de paiement, est destiné à être dirigé, après traitement, vers un réceptacle de stockage interne à l'appareil que l'on décrira ci-après, en vue d'être stocké et ensuite récupéré par la compagnie aérienne impliquée par ladite prestation.

La largeur du titre 10 prédécoupé est de 82 millimètres par exemple et sa longueur est de 187 millimètres ou 203 millimètres. Dans le cas d'une longueur de 187 millimètres, le tronçon 18 a une longueur de 55 millimètres et le tronçon 21 a une longueur de 132 millimètres.

La distance d entre la piste magnétique et le bord longitudinal 14 est de l'ordre de 4 millimètres avec une erreur absolue tolérée de l'ordre de 0,13 millimètre.

Bien entendu, les dimensions du titre ainsi que le nombre de tronçons sont donnés ici à titre explicatif et non limitatif. En pratique, les dimensions du titre prédécoupé ainsi que le nombre de tronçons peuvent être différents. Par ailleurs, l'appareil peut traiter un titre de transport exempt de tronçon prédécoupé. Il peut également traiter uniquement le tronçon carte d'embarquement en vue de le valider une seconde fois si nécessaire (par exemple lors de la réintégration des passagers dans l'avion faisant suite à une descente prématurée de ceux-ci en raison d'une alerte à la bombe).

On se réfère à nouveau à la figure 1, le titre décrit dans l'appareil un trajet interne entre une entrée d'introduction du titre définie par deux galets G1 et G2 et une sortie de délivrance du titre définie par deux galets G3 et G4.

Le titre est entraîné selon le trajet interne par une courroie C1 enroulée en circuit fermé. La courroie C1 après être passée sur un galet G5 entraîné par un moteur M de type pas à pas, passe entre les galets G1 et G2 légèrement inclinés l'un par rapport à l'autre pour une meilleure préhension du titre.

La courroie C1 passe ensuite sur les galets G6, G7 et G8 espacés les uns des autres d'une distance sensiblement égale à 50 millimètres pour permettre l'entraînement d'un document d'une telle longueur. Elle traverse ensuite un dispositif de lecture/écriture magnétique 19, qui sera décrit plus loin, en étant tendu entre les galets G8 et G9.

Une courroie C2 enroulée en circuit fermé autour des galets G10 et G11 entraîne le titre en coopération avec les têtes de lecture/écriture magnétiques que l'on décrira plus en détail ci-après.

Le galet G10 est monté pivotant entre deux positions à l'aide d'un rappel élastique R1. Il s'agit d'une première position dite baissée dans laquelle le galet G10 coopère par friction avec les têtes du dispositif de lecture/écriture en vue de réaliser une lecture/écriture magnétique sur le titre. D'un autre côté, il s'agit d'une seconde position dite relevée dans laquelle le galet G10 ne coopère pas avec lesdites têtes de lecture/écriture magnétiques et dans laquelle la courroie C1 entraîne le titre ainsi traité vers le poste de découpe que l'on décrira ci-après.

Ainsi à chaque tête de lecture, il est associé un ensemble mécanique C2, G10 et G11 assurant respectivement la pression du titre sur chacune des têtes.

Dans une variante de l'invention, chaque ensemble mécanique C2, G10 et G11 peut être remplacé par un seul galet presseur monté pivotant entre une première position dans laquelle le galet presse le titre sur la tête de lecture/écriture associée audit galet et une seconde position dans laquelle le galet ne coopère plus avec la tête de lecture/écriture correspondante.

L'entraînement de la courroie C1 est tel qu'il permet plusieurs va-et-vient devant le poste de lecture 19.

La courroie C1 est ensuite déviée par les galets G12 et G13 pour permettre l'insertion d'un poste de découpe 20.

Le poste de découpe 20 à massicot électromagnétique comprend un électro-aimant EM possédant un plongeur P muni d'une équerre E qui supporte la pièce de découpe 22 du massicot. La pièce de découpe 22 présente un bord émoussé coopérant avec un billot 24 possédant une fente centrale dans laquelle prend appui la pièce de découpe 22. Un rappel élastique R2 accroché entre l'électro-aimant EM et l'équerre E permet la rotation de l'équerre E et le retour de la pièce de découpe 22 dans une position normale remontée (sur la figure 1, la pièce 22 est illustrée en position de découpe).

Par son bord émoussé, la pièce de découpe 22 sépare les tronçons au niveau de leurs lignes d'affaiblissement respectives. Il s'agit donc ici d'une séparation des tronçons plutôt que d'une découpe desdits tronçons.

Il est prévu au niveau du dispositif de lecture/écriture ainsi qu'au niveau du poste de découpe, des détecteurs (non représentés) repérant les lignes d'affaiblissement des tronçons du titre. Une unité électronique de commande (non représentée) traite les signaux provenant des détecteurs pour commander le moteur pas à pas M.

Une fois que la découpe a été achevée sur les tronçons concernés, ceux-ci sont conduits vers les sorties que l'on décrira ci-après, un nouveau titre peut être introduit dans l'appareil.

En aval du poste de découpe 20, la courroie C1 s'enroule autour d'un aiguillage A1 muni d'une fourche F1 montée pivotante entre deux positions.

Selon une première position, la fourche F1 dirige l'un des tronçons du titre à savoir le tronçon carte d'embarquement vers le poste de délivrance 30. L'aiguillage A1 coopère avec la courroie C3 enroulée en circuit fermé autour des galets G14 et G3 montés fous. Un canal de guidage assure en coopération avec les galets G3 et G4, le guidage du tronçon du titre vers l'extérieur.

Selon une seconde position, la fourche F1 dirige l'autre des tronçons du titre, à savoir le tronçon coupon de vol vers une sortie supplémentaire. L'aiguillage A1 coopère avec un tambour T autour duquel s'enroule la courroie C1 pour faire voyager ledit tronçon coupon de vol vers une sortie qui lui est attribuée en fonction du contenu des informations lisibles sur ledit tronçon. Ensuite, la courroie C1 passe sur les galets G15 et G16 et le galet moteur G5.

Plusieurs sorties sont offertes pour le coupon de vol :
- une sortie supplémentaire vers l'extérieur 40;
- une sortie vers un premier réceptacle de stockage interne au dispositif S1; et
- une sortie vers un second réceptacle de stockage interne à l'appareil S2.

Le voyage du tronçon coupon de vol vers la sortie supplémentaire 40 ou vers les réceptacles S1 ou S2, est assuré par la coopération du tambour T et un aiguillage A2 muni d'une courroie C4 s'enroulant en circuit fermé autour d'un galet G17 et une fourche F2. La fourche F2 est montée pivotante selon deux positions :
- une première position pour diriger le tronçon vers la sortie 40, et
- une seconde position pour diriger le tronçon vers les réceptacles S1 ou S2.

Un troisième aiguillage A3 muni d'une fourche F3 allongée et montée pivotante selon deux positions, assure le guidage du tronçon vers le réceptacle S1 ou vers le réceptacle S2.

Les aiguillages A1, A2 et A3 sont commandés par l'unité électronique de commande en réponse au signaux délivrés par les détecteurs et en réponse au contenu des informations lisibles sur les tronçons du titre.

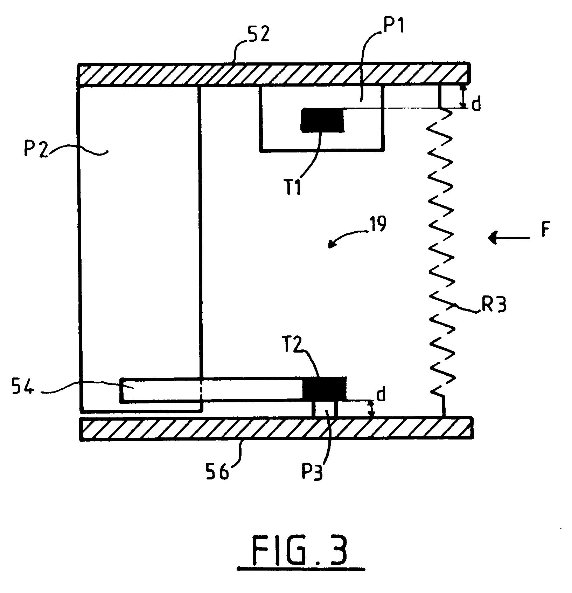

On se réfère maintenant à la figure 3, qui illustre d'une façon détaillée les têtes de lecture/écriture magnétiques du poste de lecture/écriture.

Une tête de lecture/écriture magnétique T1 est montée sur un support P1, placé transversalement par rapport au trajet interne du titre. Ce support P1 est solidaire d'une platine de référence 52 fixée parallèlement audit trajet sur le bâti (non représenté) de l'appareil.

Le bord longitudinal 14 du titre qui est espacé d'une distance d de la piste magnétique est destiné à prendre appui sur ladite platine pour assurer un meilleur guidage de titre devant la tête de lecture T1. Par ailleurs, la tête de lecture T1 est disposée à une distance d de la platine de référence 52 pour permettre une lecture correcte de la piste magnétique. La flèche F indique le sens de défilement du titre devant la tête T1.

Dans le cas d'une piste magnétique s'étendant longitudinalement de façon asymétrique sur le titre et dans le cas où le titre est introduit dans le mauvais sens c'est-à-dire dans le sens où le bord longitudinal 14 ne prend pas appui sur la platine de référence 52, la tête de lecture T1 ne peut plus assurer une lecture correcte de la piste magnétique.

Pour remédier à ce problème, il est prévu une tête de lecture/écriture magnétique supplémentaire T2 montée sur un cadre souple 54 placé parallèlement au trajet interne du titre. Le cadre 54 est constitué de deux lames souples fixées sur un support supplémentaire P2 solidaire de la platine de référence 52 et placé transversalement par rapport au trajet interne du titre. Par un support P3, le cadre 54 est solidaire d'un volet 56 monté flottant parallèlement à la platine de référence 52. La tête T2 est disposée sur le cadre souple 54 à une distance d du volet 56 monté flottant sur le bâti de l'appareil à l'aide d'un rappel élastique R3.

Le volet 56 assure le guidage du titre en servant d'appui au bord longitudinal 14 du titre. Ce volet 56 permet ainsi une lecture correcte de la piste magnétique malgré une mauvaise introduction du titre et quelque soit la largeur dudit titre.

L'asservissement de la tête T2 par rapport au bord 14 du titre s'effectue correctement grâce à la souplesse du cadre 54 sur lequel est monté la tête T2. Cet asservissement est rendu nécessaire car la tolérance sur la largeur du titre (± 0,13mm) est plus importante que la précision acceptée au niveau de la lecture/écriture magnétique (±0,1mm).

Ainsi le dispositif selon l'invention comprend deux ensembles de lecture qui sont disposés dans le cheminement du titre pour permettre le traitement des informations magnétiques contenues sur la piste magnétique quelque soit le sens d'introduction du titre (piste à droite ou à gauche).

On remarque également que le titre de transport n'est jamais accessible de l'extérieur ce qui confère une sécurité d'utilisation au dispositif.

## Revendications

1. Dispositif de traitement d'un titre à piste magnétique, en particulier d'un titre de transport aérien, du type comprenant :
- un poste d'introduction du titre (G1,G2),
- un poste de lecture/écriture magnétique sur le titre (19),
- un poste de délivrance du titre (G3,G4), et
- des moyens propres à entraîner le titre selon un trajet interne allant du poste d'introduction jusqu'au poste de délivrance, ces moyens d'entraînement étant au moins en partie définis par une courroie (C1) enroulée en circuit fermé sur des galets dont l'un est moteur, caractérisé en combinaison, par le fait que :
- le titre présente des lignes d'affaiblissement (16) au format de découpe et de partition des tronçons du titre,
- ladite courroie (C1) en circuit fermé est entrainée par un moteur unique (M) du type pas à pas, est prévue au niveau du poste de lecture/écriture (19) et s'étend jusqu'à un tambour (T) autour duquel coopèrent le poste de délivrance (G3, G4) du titre ainsi qu'au moins une sortie supplémentaire du titre, la lecture/écriture magnétique s'effectuant avant la partition des tronçons du titre,
- tandis qu'un poste de découpe (20) est prévu entre le poste de lecture/écriture (19) et le tambour (T), ce qui permet de diriger les tronçons du titre ainsi découpés vers le poste de délivrance (30) ou vers la sortie supplémentaire en fonction du contenu des informations lisibles sur lesdits tronçons.

2. Dispositif selon la revendication 1, caractérisé en ce que la sortie supplémentaire est couplée à au moins un réceptacle de stockage (S1,S2) et en ce que le titre de transport comprend au moins un premier tronçon (18) dit carte d'embarquement destiné à être dirigé vers le poste de délivrance (30), ledit premier tronçon (18) contenant des informations magnétiques relatives à l'embarquement du passager et un second tronçon (21) dit coupon de vol destiné à être dirigé vers le réceptacle de stockage (S1,S2), ledit second tronçon (21) contenant des informations relatives aux caractéristiques commerciales et financières de la prestation de transport.

3. Dispositif selon la revendication 2, caractérisé en ce que le réceptacle de stockage du titre (S1,S2) est disposé à l'intérieur du dispositif.

4. Dispositif selon la revendication 2 ou la revendication 3, caractérisé en ce que le réceptacle de stockage de titres (S1,S2) est subdivisé en deux parties (S1,S2) propres chacune à recevoir les tronçons du titre en fonction du contenu des informations lisibles sur lesdits tronçons.

5. Dispositif selon l'une des revendications 1 et 2, caractérisé en ce que le titre de transport, de forme générale rectangulaire, comprend une piste magnétique s'étendant longitudinalement sur le titre, à une distance prédéterminée (d) d'un bord longitudinal (14) du titre.

6. Dispositif selon l'une des revendications 1 à 5, caractérisé en ce que le poste de lecture/écriture magnétique (19) comprend d'un côté une tête de lecture/écriture magnétique (T1) montée sur un support (P1,) placé transversalement par rapport au trajet interne du titre, ledit support (P1) étant solidaire d'une platine de référence (52) fixée parallèlement audit trajet, le bord longitudinal (14) du titre espacé d'une distance prédéterminée (d) de la piste magnétique prenant appui sur ladite platine (52) tandis que la tête de lecture (T1) est espacée de la platine (52) de ladite distance prédéterminée (d) pour permettre une lecture correcte de la piste magnétique et de l'autre côté un galet (G10) monté fou en regard de la tête de lecture/écriture (T1) et coopérant par friction à l'aide d'un rappel élastique (R1) avec la tête (T1) en vue d'assurer la pression du titre sur ladite tête (T1).

7. Dispositif selon la revendication 6, caractérisé en ce que le poste de lecture/écriture magnétique (19) comprend d'un côté une tête de lecture/écriture magnétique supplémentaire (T2) montée sur un cadre souple (54) placé parallèlement au trajet interne du titre, ledit cadre étant solidaire d'un volet (56) monté flottant parallèlement à la platine de référence (52), le bord longitudinal du titre (14) espacé d'une distance prédéterminée (d) prenant appui sur ledit volet (56) tandis que la tête supplémentaire (T2) est espacée du volet (56) de ladite distance prédéterminée (d) pour permettre une lecture correcte de la piste magnétique quel que soit le sens d'introduction du titre et de l'autre côté un galet supplémentaire monté fou en regard de la tête de lecture/écriture supplémentaire (T2) et coopérant par friction à l'aide d'un rappel élastique en vue d'assurer la pression du titre sur ladite tête supplémentaire (T2).

8. Dispositif selon la revendication 2, caractérisé en ce que le titre présente une longueur comprise entre 52 millimètres et 250 millimètres et en ce que les galets d'entraînement du titre sont espacés les uns des autres d'une distance sensiblement égale à 50 millimètres en vue d'entraîner un titre présentant une telle longueur.

9. Dispositif selon l'une des précédentes revendications, caractérisé en ce que le poste de découpe (20) comprend un massicot électromagnétique commandé en liaison avec un détecteur des tronçons du titre, ledit massicot électromagnétique comprenant un électro-aimant (EM) possédant un plongeur (P) muni d'une équerre (E) supportant la pièce de découpe (22) du massicot, ladite équerre étant montée en rotation autour d'un axe rappelé élastiquement pour permettre au poste de découpe de s'étendre horizontalement en vue d'assurer une compacité du dispositif de traitement.

10. Dispositif selon la revendication 9, caractérisé en ce que le détecteur des tronçons du titre repère les lignes d'affaiblissement (16) prédéterminées sur le titre.

11. Dispositif selon la revendication 1, caractérisé en ce que des moyens d'aiguillage (A1,A2,A3) couplés aux sorties (30,40,51,52) et commandés en liaison avec le poste de lecture/écriture magnétique (19), dirigent chaque tronçon du titre vers leur sortie respective.

## Claims

1. Device for processing a ticket with a magnetic strip, in particular an airline ticket, of the type comprising:
- a point for the insertion of the ticket (G1, G2),
- a station for the magnetic reading/writing of the ticket (19),
- a point for the delivery of the ticket (G3, G4), and
- means suitable for channelling the ticket along an internal route from the point of insertion to the point of delivery, these traction means being at least partly defined by a belt (C1) wound in a closed circuit around capstans one of which is a motor, characterised in combination by the fact that:
- the ticket presents attenuation lines (16) on the format for the cutting and separation of the sections of the ticket,
- the said belt (C1) in a closed circuit is driven by a single motor (M) of the step-by-step type, is routed past the reading/writing station (19) and extends as far as a drum (T) around which co-operate the ticket delivery point (G3, G4) and at least one additional ticket exit, the magnetic reading/writing taking place before the separation of the sections of the ticket,
- while a cutting station (20) is located between the reading/writing station (19) and the drum (T), which allows the sections of the ticket cut in this way to be channelled towards the delivery point (30) or towards the additional exit according to the content of the information which can be read on the said sections.

2. Device according to Claim 1, characterised in that the additional exit is linked to at least one storage container (S1, S2) and in that the ticket comprises at least a first section (18) known as the boarding card and intended to be channelled towards the delivery point (30), the said first section (18) containing magnetic information relating to the embarkation of the passenger, and a second section (21) known as the flight ticket intended to be directed towards the storage container (S1, S2), the said second section (21) containing information relating to the commercial and financial characteristics of the airline company.

3. Device according to Claim 2, characterised in that the ticket storage container (S1, S2) is located inside the device.

4. Device according to Claim 2 or Claim 3, characterised in that the ticket storage container (S1, S2) is subdivided into two sections (S1, S2), each designed to receive the sections of the ticket according to the content of the information which can be read on the said sections.

5. Device according to one of Claims 1 and 2, characterised in that the ticket, usually rectangular in shape, comprises a magnetic strip running lengthways along the ticket at a predetermined distance (d) from the long edge (14) of the ticket.

6. Device according to any one of Claims 1 to 5, characterised in that the magnetic reading/writing station (19) comprises on one side a magnetic reading/writing head (T1) mounted on a support (P1) positioned transversally in relation to the internal route of the ticket, the said support (P1) being attached to a reference plate (52) fixed parallel to the said route, the long edge (14) of the ticket positioned at a predetermined distance (d) from the magnetic strip resting against the said plate (52) while the said reading head (T1) is positioned at the said predetermined distance (d) from the plate (52) to enable an accurate reading of the magnetic strip, and on the other a loose-mounted capstan (G10) opposite the reading/writing head (T1) and operating by friction with the help of a flexible adjusting mechanism (R1) in conjunction with the said head (T1) in order to ensure the pressure of the ticket on the said head (T1).

7. Device according to Claim 6, characterised in that the magnetic reading/writing station (19) comprises on one side an additional magnetic reading/writing head (T2) mounted on a flexible framework (54) placed parallel to the internal route of the ticket, the said framework being attached to a flap (56) mounted floating parallel to the reference plate (52), the long edge of the ticket (14) positioned at a predetermined distance (d) resting against the said flap (56) while the additional head (T2) is positioned at the predetermined distance (d) from the flap (56) to enable an accurate reading of the magnetic strip regardless of which way the ticket is inserted, and on the other an additional loose-mounted capstan opposite the additional reading/writing head (T2) and operating in conjunction by friction with the help of a flexible adjusting mechanism in order to ensure the pressure of the ticket on the said additional head (T2).

8. Device in accordance with Claim 2, characterised by the fact that the ticket has a length of between 52 millimetres and 250 millimetres and by the fact that the distance between each of the capstans channelling the tickets is approximately equal to 50 millimetres in order to enable them to channel a ticket of this length.

9. Device in accordance with any of the preceding claims, characterised in that the cutting station (20) comprises an electromagnetic cutter controlled in conjunction with a scanner which identifies the sections of the ticket, the said electromagnetic cutter comprising an electromagnet (EM) with a plunger (P) fitted with a bracket supporting the cutting section (22) of the cutter, the said bracket being mounted in rotation around an axis adjusted flexibly to enable the cutting station to lie horizontally in order to ensure the compactness of the processing device.

10. Device in accordance with Claim 9, characterised in that the scanner identifies the ticket sections by locating the attenuation lines (16) pre-marked on the ticket.

11. Device in accordance with Claim 1, characterised in that the switching mechanisms (A1, A2, A3), linked to the exits (30, 40, 51, 52) and controlled in conjunction with the magnetic reading/writing station (19), channel the sections of the ticket towards their respective exits.

## Patentansprüche

1. Vorrichtung zur Verarbeitung einer Karte mit Magnetstreifen, insbesondere einer Flugkarte, von der Art die umfaßt:
- einen Eingabeabschnitt für die Karte (G1, G2),
- eine magnetische Leser/Schreib-Station für die Karte (19)
- einen Ausgabeabschnitt für die Karte (G3, G4), und
- Einrichtungen, die die Karte längs eines inneren Weges bewegen können, der von dem Eingabeabschnitt bis zu dem Ausgabeabschnitt geht, wobei diese Antriebseinrichtungen wenigstens zum Teil durch einen Gurt (C1) festgelegt sind, der unendlich über Rollen geschlauft ist, von denen eine ein Antrieb ist, in Kombination **dadurch gekennzeichnet**, daß:
- die Karte Schwächungslinien (16) im Format des Abschneidens und Trennens der Abschnitte der Karte aufweist,
- der genannte endlose Gurt (C1) von einem einzigen Motor (M) vom Typ eines Schrittmotors angetrieben wird, auf der Höhe der Lese/SchreibStation (19) vorgesehen ist und sich bis zu einer Trommel (T) erstreckt, um die herum der Ausgabeabschnitt (G3, G4) der Karte sowie mindestens ein zusätzlicher Ausgang der Karte zusammenwirken, wobei das magnetische Lesen/Schreiben vor der Teilung der Abschnitte der Karte durchgeführt wird,
- während eine Schneidstation (20) zwischen der Lese/Schreib-Station (19) und der Trommel (T) vorgesehen ist, die gestattet, die derart abgeschnittenen Abschnitte der Karte zu dem Ausgabeabschnitt (30) oder zu dem zusätzlichen Ausgang in Abhängigkeit von dem Inhalt der auf den genannten Abschnitten lesbaren Informationen zu lenken.

2. Vorrichtung gemäß Anspruch 1, **dadurch gekennzeichnet**, daß der zusätzliche Ausgang mit mindestens einem Speicherbehälter (S1, S2) gekoppelt ist und daß die Fahrkarte wenigstens einen ersten Abschnitt (18), Bordkarte genannt, aufweist, der zu dem Ausgabeabschnitt (30) zu lenken ist, wobei der genannte erste Abschnitt (18) magnetische Informationen in bezug auf das an Bord gehen des Passagiers enthält, und einen zweiten Abschnitt (21), Flugcoupon genannt, aufweist, der dazu bestimmt ist, zu dem Speicherbehälter (S1, S2) gelenkt zu werden, wobei der genannte zweite Abschnitt (21) Informationen in bezug auf die gewerblichen und finanziellen Eigenschaften der Transportleistung enthält.

3. Vorrichtung gemäß Anspruch 2, **dadurch gekennzeichnet**, daß der Speicherbehälter für die Karte (S1, S2) im Inneren der Vorrichtung angeordnet ist.

4. Vorrichtung nach Anspruch 2 oder Anspruch 3, **dadurch gekennzeichnet**, daß der Speicherbehälter für die Karten (S1, S2) in zwei Teile (S1, S2) unterteilt ist, von denen jeder die Abschnitte der Karte als Funktion des Inhaltes der auf den genannten Abschnitten gelesenen Informationen erhalten kann.

5. Vorrichtung gemäß einem der Ansprüche 1 und 2, **dadurch gekennzeichnet**, daß die Fahrkarte von allgemein rechteckiger Form einen Magnetstreifen aufweist, der sich in Längsrichtung über die Fahrkarte in einem vorbestimmten Abstand (d) von dem Längsrand (14) der Karte erstreckt.

6. Vorrichtung gemäß einem der Ansprüche 1 bis 5, **dadurch gekennzeichnet**, daß die magnetische Lese/Schreib-Station (19) auf einer Seite einen magnetischen Lese/ Schreib-Kopf (T1) umfaßt, der an einer Stütze (P1) angebracht ist, die quer in bezug auf den inneren Weg der Karte angeordnet ist, wobei die genannte Stütze (P1) fest mit einer Bezugsplatte (52) verbunden ist, die parallel zu dem genannten Weg befestigt ist, sich der Längsrand (14) der Karte, der um eine vorbestimmte Strecke (d) von dem Magnetstreifen beabstandet ist, auf der genannten Platte (52) abstützt, während der Lesekopf (T1) von der Platte (52) um die vorbestimmte Streckte (d) beabstandet ist, um ein richtiges Lesen des Magnetstreifens zu gestatten, und auf der anderen eine Freilaufrolle (G10) gegenüber dem Lese/SchreibKopf (T1) aufweist und die durch Reibung mit Hilfe eines elastischen Rückführelementes (R1) mit dem Kopf (T1) im Hinblick darauf zusammenarbeitet, einen Druck der Karte gegen den genannten Kopf (T1) sicherzustellen.

7. Vorrichtung gemäß Anspruch 6, **dadurch gekennzeichnet**, daß der magnetische Lese/Schreib-Abschnitt (19) auf einer Seite einen zusätzlichen, magnetischen Lese/ Schreib-Kopf (T2) umfaßt, der an einem flexiblen Rahmen (54) angebracht ist, der parallel zu dem inneren Weg der Karte angeordnet ist, wobei der Rahmen fest mit einer Klappe (56) verbunden ist, die parallel zu der Bezugsplatte (52) schwimmend angebracht ist, wobei der Längsrand der Karte (14), der um eine vorbestimmte Strecke (d) beabstandet ist, sich auf der genannten Klappe (56) abstützt, während der genannte zusätzliche Kopf (T2) von der Klappe (56) um die genannte vorbestimmte Strecke (d) beabstandet ist, um ein richtiges Lesen des Magnetstreifens zu gestatten, wie auch immer der Eingabesinn der Karte ist, und auf der anderen Seite eine zusätzliche Freilaufrolle gegenüber dem zusätzlichen Lese/Schreib-Kopf (T2) aufweist und die durch Reibung mit Hilfe eines elastischen Rückführelementes im Hinblick darauf zusammenarbeitet, den Druck der Karte gegen den genannten, zusätzlichen Kopf (T2) sicherzustellen.

8. Vorrichtung gemäß Anspruch 2, dadurch gekennzeichnet, daß die Karte eine Länge zwischen 52 Millimeter und 250 Millimeter aufweist und daß die Transportrollen der Karte voneinander mit einer Strecke beabstandet sind, die im wesentlichen gleich 50 Millimeter ist, um eine Karte zu transportieren, die eine solche Länge aufweist.

9. Vorrichtung nach einem der vorhergehenden Ansprüche, dadurch gekennzeichnet, daß die Schneidstation (20) eine elektromagnetische Schneidvorrichtung umfaßt, die in Verbindung mit einer Erfassungseinrichtung für die Abschnitte der Karte gesteuert wird, wobei die genannte elektromagnetische Schneidvorrichtung einen Elektromagneten (EM) umfaßt, der einen Tauchanker (9) aufweist, der mit einem Winkel (E) versehen ist, der das Schneidteil (22) der Schneidvorrichtung trägt, wobei der genannte Winkel zur Drehung um eine Achse angebracht ist, die elastisch zurückgehalten wird, damit sich die Schneidstation horizontal im Hinblick darauf erstrecken kann, eine Kompaktheit der Vorrichtung zur Verarbeitung sicherzustellen.

10. Vorrichtung gemäß Anspruch 9, **dadurch gekennzeichnet**, daß die Erfassungseinrichtung für die Abschnitte der Karte die auf der Karte vorbestimmten Schwächungslinien (16) erfaßt.

11. Vorrichtung gemäß Anspruch 1, **dadurch gekennzeichnet**, daß die Weicheneinrichtungen (A1, A2, A3), die mit den Ausgängen (30, 40, 54, 52) gekoppelt sind und in Verbindung mit der magnetischen Lese/Schreib-Station (19) gesteuert werden, jeden Abschnitt der Karte zu ihrem jeweiligen Ausgang lenkt.
